# EUROPÄISCHE PATENTSCHRIFT

(11) **EP 3 483 049 B1**
(45) Veröffentlichungstag und Bekanntmachung des Hinweises auf die Patenterteilung: **03.09.2025**
(21) Anmeldenummer: 18204570.8
(22) Anmeldetag: 06.11.2018
(51) Int. Cl.: B62L 3/02

(54) **HYDRAULIKGEBERVORRICHTUNG FÜR EINE HYDRAULISCHE BREMSE ODER KUPPLUNG LENKERGEFÜHRTER FAHRZEUGE UND HYDRAULISCHE BREMSE EINES LENKERGEFÜHRTEN FAHRZEUGES**
HYDRAULICS SENSOR DEVICE FOR A HYDRAULIC BRAKE OR CLUTCH OF STEERING-GUIDED VEHICLES AND HYDRAULIC BRAKE OF A STEERING-GUIDED VEHICLE
DISPOSITIF ÉMETTEUR HYDRAULIQUE POUR UN FREIN HYDRAULIQUE OU ACCOUPLEMENT DES VÉHICULES GUIDÉS PAR GUIDON ET FREIN HYDRAULIQUE D'UN VÉHICULE GUIDÉ PAR GUIDON

(30) Priorität: 06.11.2017 DE 102017219666
(43) Veröffentlichungstag der Anmeldung: 15.05.2019
(73) Patentinhaber: Gustav Magenwirth GmbH & Co. KG, 72574 Bad Urach (DE)
(72) Erfinder: Ruopp, Michael, 89180 Berghülen (DE)
(74) Vertreter: Friese Goeden Patentanwälte PartGmbB

(56) Entgegenhaltungen:
- DE-A1- 102015 010 839
- DE-A1- 102017 202 842
- FR-A- 960 276
- GB-A- 800 196
- US-A1- 2011 162 929

## Beschreibung

Die Erfindung betrifft eine Hydraulikgebervorrichtung für eine hydraulische Bremse oder Kupplung eines lenkergeführten Fahrzeugs gemäß dem Oberbegriff von Anspruch 1 und eine hydraulische Bremse eines lenkergeführten Fahrzeugs.

Aus der GB 800,196 A ist eine Hydraulikgebervorrichtung bekannt, die in einem Lenkerrohr angeordnet ist. Die bekannte Hydraulikgebervorrichtung ist für ein geschlossenes System ohne Ausgleichsbehälter und weist einen relativ komplizierten Aufbau auf. In dem Hydraulikzylinder ist eine Druckzylinder angeordnet. Die Druckstange wird mit einer Umlenkung angesteuert, die um den Zylinder herum geführt ist und die von dem Hebel angesteuert wird. Dieser Aufbau ist sehr platzintensiv und nicht für offene Systeme mit einem Ausgleichsbehälter geeignet.

Aus der DE 10 2015 010 839 A1 und der DE 10 2015 010 858 A1 sind Hydraulikgebervorrichtungen für eine spezielle Lenkergeometrie bekannt, bei denen ein Lenkerrohr nach vorne geführt ist. An dem offenen Ende des Lenkerohrs ragt die Hydraulikgebervorrichtung nach vorne aus dem Lenkerrohr heraus und ist auch um das Lenkerrohr herum angeordnet. Diese bekannten Hydraulikgebervorrichtungen sind nicht dafür geeignet, an Lenkern montiert zu werden, die quer zur Fahrzeuglängsachse verlaufen, wie sie beispielsweise bei Trekkingrädern, Mountainbikes oder den meisten Elektrofahrrädern verwendet werden. DE102015010839A1 offenbart eine Hydraulikgebervorrichtung gemäß der Präambel des Anspruchs **1.**

Aus der US 6,502,675 B1 sind Hydraulikgebervorrichtungen für eine hydraulische Bremse eines lenkergeführten Fahrzeugs bekannt, bei denen der Geberzylinder in dem Lenkerrohr angeordnet ist.

Die aus der US 6,502,675 B1 bekannten Hydraulikgebervorrichtungen haben den Nachteil, dass die Geberzylinder in dem Lenkerrohr vom Hebel aus gesehen in Richtung Fahrzeugmitte angeordnet sind. Dort weist das Lenkerrohr in der Regel Biegungen auf. Dadurch steht nur ein sehr begrenzter Bauraum zur Verfügung und die Montage ist umständlich und schwierig, wenn man die üblichen gebogenen Lenkerrohre einsetzen will.

Der Erfindung liegt daher die Aufgabe zugrunde, eine Hydraulikgebervorrichtung anzugeben, die bei üblichen Lenkerrohren mit Biegungen in Richtung Fahrzeugmitte leicht montiert werden können.

Die Aufgabe wird erfindungsgemäß durch eine Hydraulikgebervorrichtung gemäß den Merkmalen von Anspruch 1 gelöst. Vorteilhafte Weiterbildungen der Erfindung finden sich in den Unteransprüchen.

Gemäß der Erfindung wird eine Hydraulikgebervorrichtung für eine hydraulische Bremse oder Kupplung lenkergeführter Fahrzeuge mit einem Hebel, der in einer Aufnahme drehgelenkig angeordnet ist, und einem Hydraulikzylinder angegeben, der in einem Lenkerrohr des lenkergeführten Fahrzeugs anordbar ist, wobei die Hydraulikgebervorrichtung eine Zugeinrichtung aufweist, die bei der Betätigung des Hydraulikgebervorrichtung eine Zugkraft auf den Kolben des Hydraulikzylinders ausübt.

Die Ausführung der Erfindung hat den Vorteil, dass infolge der erfindungsgemäßen Ausgestaltung genügend Bauraum zur Verfügung steht, denn der Geberzylinder kann vom Hebel zur Fahrzeugseite, **d.h.** im geraden Bereich des Griffrohrs angeordnet werden.

Erfindungsgemäß kann die Zugeinrichtung eine Zugstange umfassen. Dabei kann die Zugstange gleichzeitig die Kolbenstange für den Kolben der Hydraulikgebervorrichtung sein. Durch die Doppelfunktion der Zugstange kann ein kompakter und einfacher Aufbau erreicht werden. Erfindungsgemäß kann die Kolbenstange durch den Druckraum verlaufen. Das hat den Vorteil eines kompakten und einfachen Aufbaus.

Erfindungsgemäß kann ein Hydraulikkanal von dem Hydraulikzylinder zu der Hydraulikleitung, die mit der zugeordneten Hydrauliknehmervorrichtung verbunden ist, in der Zugeinrichtung angeordnet sein.

Erfindungsgemäß kann der Hydraulikanal in der Zugstange angeordnet sein. Diese Ausführung hat den Vorteil, dass wegen der Doppelfunktion der Zugstange sehr wenig Platz benötigt wird.

Gemäß Anspruch 1 weist die Hydraulikgebervorrichtung eine Verschiebeeinrichtung auf, die in dem Lenkerrohr des lenkergeführten Fahrzeugs in Längerichtung des Lenkerrohrs verschiebbar angeordnet ist.

Gemäß Anspruch 1 ist die Verschiebeeinrichtung mit der Zugeinrichtung verbunden.

Erfindungsgemäß kann der Hebel an zwei Drehachsen angelenkt sein, an denen zwei an dem Hebel drehgelenkig angeordnete Arme angreifen. Diese Ausführung hat den Vorteil, dass bei einem tiefliegenden Drehpunkt die Zunahme der Übersetzung etwas schwächer ausfallen kann.

Erfindungsgemäß kann der eine Arm Teil eines Druckstücks sein.

Erfindungsgemäß kann die Zugeinrichtung eine Drehsicherung aufweisen, die ein Verdrehen in dem Lenkerrohr verhindert bzw. einschränkt. Dabei kann die Drehsicherung eine Ausrichteeinrichtung zwischen der Verschiebeeinrichtung und einem Druckstück umfassen, das die Kraft von dem Hebel auf die Verscheibeeinrichtung überträgt. Beispielsweise kann die Verschiebeeinrichtung eine Nut umfassen, an die Gabelbeine bzw. zwei Fortsätze des Druckstücks angreifen. Bei Ausführungen ohne Druckstück kann der Hebe auch direkt an der Verschiebeeinrichtung entsprechend angreifen. Alternativ oder zusätzlich kann die Verschiebeeinrichtung auch zwei Stege umfassen, zwischen denen ein Steg des Druckstücks bzw. des Hebels eingreift.

Eine Drehsicherung ist vorteilhaft, weil die Hydraulikleitung eventuell ein Drehmoment auf die Hydraulikgebervorrichtung ausüben könnte, weil die Hydraulikleitung vor der Montage auf einer Rolle angeordnet gewesen sein könnte und daher einen Drall aufweist.

Erfindungsgemäß kann die Verschiebeeinrichtung eine Kontur aufweisen, um vorzugsweise mit zunehmender Betätigung der Hydraulikgebervorrichtung eine abnehmende Übersetzung zu erreichen. Für diese Ausführungen der Erfindung ist es vorteilhaft, eine Drehsicherung der Verschiebeeinrichtung vorzusehen.

Erfindungsgemäß kann die Hydraulikgebervorrichtung eine Griffweiteneinstellvorrichtung aufweisen, mit der der Abstand zwischen der Aufnahme für den Hebel und dem Geberzylinder zur Einstellung der Griffweite einstellbar ist.

Daher wird gemäß der Erfindung auch eine Hydraulikgebervorrichtung für eine hydraulische Bremse oder Kupplung lenkergeführter Fahrzeuge mit einem Hebel, der in einer Aufnahme drehgelenkig angeordnet ist, und einem Hydraulikzylinder angegeben, der in einem Lenkerrohr des lenkergeführten Fahrzeugs anordbar ist, wobei die Hydraulikgebervorrichtung eine Griffweiteneinstellvorrichtung aufweist, mit der der Abstand zwischen der Aufnahme für den Hebel und dem Geberzylinder zur Einstellung der Griffweite einstellbar ist.

Erfindungsgemäß kann die Aufnahme auf dem Lenkerrohr verschiebbar angeordnet sein.

Erfindungsgemäß kann der Geberzylinder in dem Lenkerrohr verschiebbar angeordnet sein.

Erfindungsgemäß kann der Geberzylinder an dem Lenkerrohr mit einem Befestigungsmittel befestigt sein. Das Befestigungsmittel kann eine Schraube sein. In dem Lenkerrohr kann ein Langloch ausgebildet sein. Das Langloch kann einen Rand mit Konturen bzw. mit einer Rasterung aufweisen, damit das Befestigungsmittel nur in bestimmten Stellungen festgezogen werden kann.

Erfindungsgemäß kann die Hydraulikgebervorrichtung eine Zugeinrichtung aufweisen, die bei der Betätigung des Hydraulikgebervorrichtung eine Zugkraft auf den Kolben des Hydraulikzylinders ausübt, und eine Verschiebeeinrichtung aufweisen, die in dem Lenkerrohr des lenkergeführten Fahrzeugs in Längerichtung des Lenkerrohrs verschiebbar angeordnet ist, wobei die Verschiebeeinrichtung mit der Zugeinrichtung verbunden ist. Dabei kann die Länge der Zugeinrichtung einstellbar sein.

Erfindungsgemäß kann die Zugeinrichtung eine Zugstange aufweisen.

Erfindungsgemäß kann die Länge der Zugstange einstellbar sein. Alternativ oder zusätzlich kann erfindungsgemäß der Angriffspunkt der Zugeinrichtung an der Verschiebeinrichtung und/oder an dem Geberzylinder einstellbar sein.

Beispielsweise kann die Verbindung zwischen Verschiebeeinrichtung und Zugeinrichtung bzw. zwischen Zugeinrichtung und Geberzylinder über eine Schraubverbindung erfolgen. Das hat den Vorteil, dass durch Drehen der Zugeinrichtung bzw. einer Schraube der Schraubverbindung der Angriffspunkt leicht verstellt bzw. eingestellt werden kann.

Erfindungsgemäß kann die Zugeinrichtung eine Zugstange aufweisen, die über eine Schraube mit der Verschiebeinrichtung verbunden ist.

Erfindungsgemäß kann die Hydraulikgebervorrichtung einen in dem Lenkerrohr angeordneten Ausgleichsraum aufweisen.

Daher wird gemäß der Erfindung auch eine Hydraulikgebervorrichtung für eine hydraulische Bremse oder Kupplung lenkergeführter Fahrzeuge mit einem Hebel, der in einer Aufnahme drehgelenkig angeordnet ist, und einem Hydraulikzylinder, der in einem Lenkerrohr des lenkergeführten Fahrzeugs anordbar ist, wobei die Hydraulikgebervorrichtung einen in dem Lenkerrohr angeordneten Ausgleichsraum aufweist.

Erfindungsgemäß kann der Geberzylinder zwischen der Aufnahme für den Hebel und Ausgleichraum angeordnet sein.

Erfindungsgemäß kann der Geberzylinder einen Fortsatz aufweisen, in dem der Ausgleichsraum angeordnet ist.

Erfindungsgemäß kann die Aufnahme für den Hebel an der Außenseite des Lenkerrohrs anordnet sein. Dabei kann der Hebel in Richtung Fahrzeugmitte gerichtet sein.

Erfindungsgemäß kann der Kolben des Geberzylinders einen Fortsatz aufweisen, der sich in den Ausgleichsraum erstreckt. Dabei kann in dem Fortsatz des Kolbens ein Hydraulikkanal angeordnet sein.

Erfindungsgemäß kann der Hydraulikkanal mit dem Druckraum in dem Geberzylinder verbunden sein.

Erfindungsgemäß kann der Hydraulikkanal durch den Ausgleichsraum verlaufen.

Erfindungsgemäß kann der Ausgleichsraum an der Außenseite des Lenkerrohrs anordnet sein.

Erfindungsgemäß kann die Aufnahme für die Entlüftungsschraube einen Luerkonus zur Aufnahme einer handelsüblichen Spritze aufweisen.

Erfindungsgemäß kann die Hydraulikgebervorrichtung einen Sensor zur Erfassung der Stellung des Hebels aufweisen. Dabei kann die Stellung des Hebels verwendet werden, um ein Bremslicht zu betätigen. Weiter kann bei Fahrzeugen mit einem Elektroantrieb die Stellung des Hebels verwendet werden, eine Rekuperation anzusteuern.

Erfindungsgemäß kann die Hydraulikgebervorrichtung eine Anzeige aufweisen, die den Füllstand in dem Ausgleichsraum anzeigt. Dabei kann die Anzeige hydraulisch mit dem Ausgleichsraum verbunden sein.

Erfindungsgemäß kann die Anzeige im Griffbereich des Lenkers angeordnet sein.

Erfindungsgemäß kann die Anzeige an dem Ende des Lenkerrohrs vorgesehen sein. Dazu kann das Ausgleichsgehäuse vorzugsweise zweiteilig ausgebildet sein, damit ein Anzeigeabschnitt vorteilhafterweise transparent ausgebildet werden kann.

Alternativ oder zusätzlich kann die Anzeige einen Sensor zum Erfassen des Füllstands des Ausgleichsraums und Mittel zur Ansteuerung der Anzeige umfassen. Dabei kann die Sensoreinrichtung einen Magneten umfassen, der an dem Balg angeordnet ist und mit einem Sensor zusammenwirkt, der beispielsweise an der Wand des Ausgleichsgehäuses und/oder des Geberzylinders in dem Bereich des Ausgleichsgehäuses vorgesehen sein kann.

Erfindungsgemäß kann die Hydraulikgebervorrichtung bis auf den Betätigungshebel vollständig in dem Lenkerrohr integriert bzw. aufgenommen sein.

Erfindungsgemäß kann sich das Lenkerrohr des lenkergeführten Fahrzeugs quer zur Fahrzeugrichtung ertrecken. Mit anderen Worten kann das Lenkerrohr derart ausgebildet und angeordnet sein, dass die Enden des Lenkerrohrs an den beiden Seiten des Fahrzeugs angeordnet sind. Erfindungsgemäß kann die Hydraulikgebervorrichtung an einem Ende des Lankerrohrs angeordnet sein, bzw. kann ein Paar Hydraulikgebervorrichtungen (beispielsweise für eine Vorderrradbremse und eine Hinteradbremse) an beiden Lenkerenden angeordnet sein, die auf gegenüberliegenden Fahrzeugseiten liegen (z.B. in Fahrtrichtung links und rechts).

Erfindungsgemäß wird auch eine hydraulische Bremse bzw. hydraulische Kupplung bzw. hydraulische Fahrradbremse angegeben, wobei die ine hydraulische Bremse bzw. hydraulische Kupplung bzw. hydraulische Fahrradbremse eine erfindungsgemäße Hydraulikgebervorrichtung aufweist.

Erfindungsgemäß kann die hydraulische Fahrradbremse eine Scheibenbremse bzw. eine Felgenbremse sein.

Die Erfindung wird im Folgenden anhand der in den Figuren gezeigten Ausführungsbeispiele beschrieben. Dabei werden folgende Bezugszeichen verwendet:
- 1: Gebervorrichtung
- 10: Hebel
- 11: Armabschnitt
- 20: Lenkerrohr
- 21: Öffnung
- 22: Öffnung
- 23: Öffnung
- 30: Griffrohr
- 32: Schraube
- 33: Schraube
- 40: Aufnahme
- 41: Drehachse
- 41A: Drehachse
- 41B: Drehachse
- 42: Schelle
- 43: Adapter für Schalteinheit
- 44: Griffweitenverstelleinrichtung
- 45: Lasche
- 46: Schraube
- 50: Druckstück
- 50A: Druckstückabschnitt
- 50B: Druckstück
- 51A: Arm
- 51B: Armabschnitt
- 53: Drehachse
- 54: Drehachse
- 55: Vorsprung
- 56: Fortsatz
- 57: Fortsatz
- 60: Verschiebeeinrichtung
- 61: Durchgang
- 62: Durchgang
- 63: Steg
- 64: Nut
- 65: Aufnahme
- 66: Kontur
- 70: Zugeinrichtung
- 71: Kopf
- 72: Hauptkörper
- 73: Verschraubung
- 731: Stutzen
- 74: Schraube
- 75: Hydraulikkanal
- 76: öffnung
- 80: Geberzylinder
- 81: Rückstellfeder
- 82: Druckraum
- 83: Primärdichtung
- 84: Dichtung
- 85: Druckleitung
- 86: Fortsatz
- 90: Ausgleichsraum
- 91: Balg
- 911: Wulst
- 92: Deckel
- 93: Durchgang
- 94: Entlüftungsschraube
- 95: Konus
- 96: Überlaufkanal
- 97: Dichtung
- 98: Entlüftungsbohrung
- 100: Hydraulikleitung
- 101: Klemmschraube
- 102: Anschlussstutzen
- 110: Rahmen
- 111: Abflachung
- 120: Ausgleichsgehäuse
- 121: Abflachung
- 122: Schnappeinrichtung
- 123: Schnappeinrichtung
- 124: Stirnwand
- 125: Stirnwand
- 126: Steg
- 130: Sensoreinrichtung
- 131: Magnet
- 132: Hallsensor
- 140: Anzeige
- 150: Ausgleichsabschnitt
- 151: Steg
- 152: Vorsprung
- 160: Anzeigeabschnitt
- 161: Dichtung **(z.B.** O-Ring)
- 162: Durchgang
- 163: Stirnwand
- 164: Markierung
- 165: Markierung
- 166: Bereich
- 170: Sensoreinrichtung
- 171: Magnet
- 172: Sensor (z.B. Hallsensor, Reedkontakt, etc.)

### Kurzbeschreibung der Figuren:

- Fig. 1: zeigt eine Schnittansicht durch eine erste Ausführung einer Hydraulikgebervorrichtung gemäß einer Ausführung der Erfindung.
- Fig. 2: zeigt eine Seitenansicht der Hydraulikgebervorrichtung von Fig. 1.
- Fig. 3: zeigt eine Außenansicht eines Lenkerrohrs für die Hydraulikgebervorrichtung von Fig. 1.
- Fig. 4: zeigt eine Seitenansicht des Lenkerrohrs von Fig. 3.
- Fig. 5: zeigt eine Seitenansicht einer Verschiebeinrichtung für die Hydraulikgebervorrichtung von Fig. 1.
- Fig. 6: zeigt eine Ansicht der Verschiebeinrichtung von Fig. 5 von oben.
- Fig. 7: zeigt eine Ansicht der Verschiebeinrichtung von Fig. 5 von dem Ende des Lenkerrohrs aus gesehen in Richtung der Mitte des Lenkerrohrs in einem Lenkerrohr.
- Fig. 8: zeigt eine Seitenansicht eines Druckstücks für die Hydraulikgebervorrichtung von Fig. 1.
- Fig. 9: zeigt eine Ansicht des Druckstücks von Fig. 8 von der Lenkermitte aus gesehen.
- Fig. 10: zeigt eine Schnittansicht entsprechend Fig. 1 einer Hydraulikgebervorrichtung gemäß einer alternativen Ausführung der Erfindung.
- Fig. 11: zeigt eine Schnittansicht entsprechend Fig. 1 einer Hydraulikgebervorrichtung gemäß einer alternativen Ausführung der Erfindung.
- Fig. 12: zeigt eine Schnittansicht entsprechend Fig. 1 einer Hydraulikgebervorrichtung gemäß einer alternativen Ausführung der Erfindung.
- Fig. 13: zeigt eine Seitenansicht der Hydraulikgebervorrichtung von Fig. 12.
- Fig. 14: zeigt eine Schnittansicht entsprechend Fig. 1 einer Hydraulikgebervorrichtung gemäß einer alternativen Ausführung der Erfindung.
- Fig. 15: zeigt eine Seitenansicht der Hydraulikgebervorrichtung von. 14.
- Fig. 16: zeigt eine Schnittansicht entsprechend Fig. 1 einer Hydraulikgebervorrichtung gemäß einer alternativen Ausführung der Erfindung.
- Fig. 17: zeigt eine Seitenansicht der Hydraulikgebervorrichtung von Fig. 16.
- Fig. 18: zeigt eine Schnittansicht entsprechend Fig. 1 einer Hydraulikgebervorrichtung gemäß einer alternativen Ausführung der Erfindung.
- Fig. 19: zeigt eine Seitenansicht der Hydraulikgebervorrichtung von Fig. 18.
- Fig. 20: zeigt eine Ansicht der Hydraulikgebervorrichtung von Fig. 10 bzw. Fig. 1 vom Lenkerende aus gesehen.
- Fig. 21: zeigt eine vergrößerte Teilansicht der Schnittansicht von Fig. 12.
- Fig. 22: zeigt eine Schnittansicht entsprechend Fig. 1 einer Hydraulikgebervorrichtung gemäß einer alternativen Ausführung der Erfindung.
- Fig. 23: zeigt eine Schnittansicht entsprechend Fig. 1 einer Hydraulikgebervorrichtung gemäß einer alternativen Ausführung der Erfindung.
- Fig. 24: zeigt eine Seitenansicht der Hydraulikgeber- vorrichtung von Fig. 23.
- Fig. 25: zeigt eine Schnittansicht entsprechend Fig. 1 einer Hydraulikgebervorrichtung gemäß einer alternativen Ausführung der Erfindung.
- Fig. 26: zeigt eine Ansicht der Hydraulikgebervorrichtung von Fig. 25 vom Lenkerende aus gesehen.
- Fig. 27: zeigt eine Schnittansicht der Hydraulikgebervorrichtung von Fig. 25.
- Fig. 28: zeigt eine Schnittansicht der Hydraulikgebervorrichtung von Fig. 25.
- Fig. 29: zeigt eine vergrößerte Teilansicht der Schnittansicht von Fig. 28.
- Fig. 30: zeigt eine Seitenansicht eines Rahmens für die Hydraulikgebervorrichtung von Fig. 25.
- Fig. 31: zeigt eine Ansicht des Rahmens von Fig. 30 von dem Lenkerende aus gesehen.
- Fig. 32: zeigt eine Seitenansicht eines Ausgleichsgehäuses für die Hydraulikgebervorrichtung von Fig. 25.
- Fig. 33: zeigt eine Ansicht des Ausgleichsgehäuses von Fig. 32 von dem Lenkerende aus gesehen.
- Fig. 34: zeigt eine vergrößerte Teilansicht der Ansicht von Fig. 33.
- Fig. 35: zeigt eine Seitenansicht eines alternativen Ausgleichsgehäuses für eine Hydraulikgebervorrichtung entsprechend der von Fig. 25.
- Fig. 36: zeigt eine Ansicht des Ausgleichsgehäuses von Fig. 35 von der in Fig. 35 linken Seite aus gesehen.
- Fig. 37: zeigt eine Schnittansicht des Ausgleichsgehäuses von Fig. 35 in der Schnittebene, die in Fig. 36 mit den Pfeilen XXXVII gekennzeichnet ist.
- Fig. 38: zeigt eine Ansicht des Ausgleichsgehäuses von Fig. 35 von oben.
- Fig. 39: zeigt eine Seitenansicht des Anzeigeabschnitts des Ausgleichsgehäuses von Fig. 35.
- Fig. 40: zeigt eine Schnittansicht des Anzeigeabschnitts von Fig. 39 entsprechend der Schnittebene von Fig. 37.
- Fig. 41: zeigt eine Ansicht des Anzeigeabschnitts von Fig. 39 von dem Lenkerende aus gesehen.
- Fig. 42: zeigt eine Ansicht des Anzeigeabschnitts von Fig. 39 von dem Ausgleichsabschnitt des Ausgleichsgehäuses aus gesehen.
- Fig. 43: zeigt eine Schnittansicht einer Hydraulikgebervorrichtung mit einem Ausgleichsgehäuse gemäß den Figuren 35 bis 42 für den Einbau in einem Lenkerrohr eines lenkergeführten Fahrzeugs, wobei der Schnitt entsprechend der Schnittebene von Fig. 37 verläuft.
- Fig. 44: zeigt eine Seitenansicht der Hydraulikgebervorrichtung von Fig. 43.
- Fig. 45: zeigt eine Seitenansicht der Hydraulikgebervorrichtung von Fig. 43.

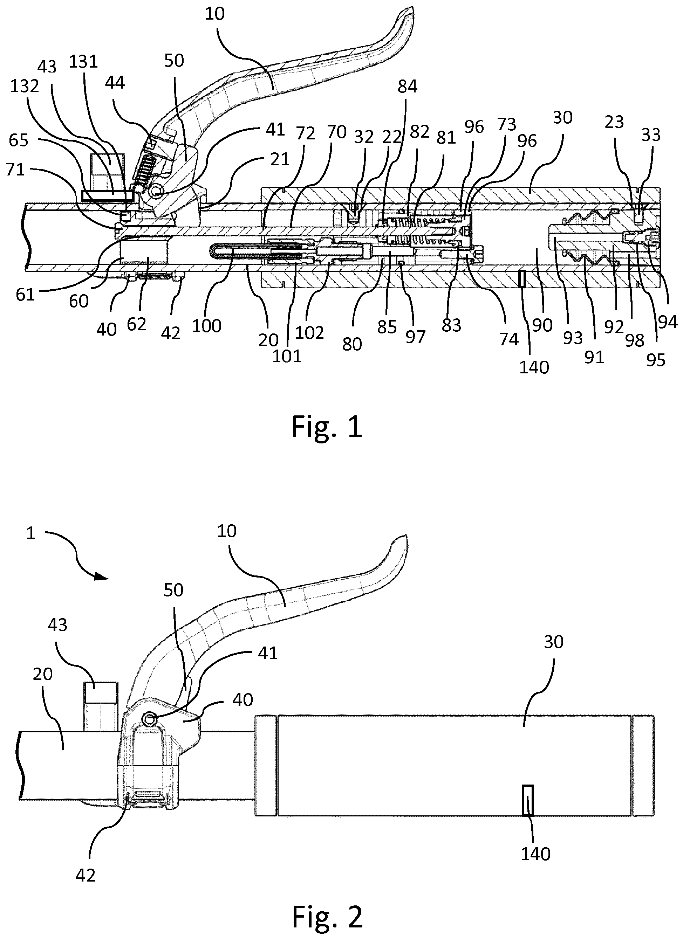

Die Figuren 1 bis 9 zeigen eine erste Ausführung einer hydraulischen Gebervorrichtung gemäß einer Ausführung der Erfindung.

Die hydraulische Gebervorrichtung 1 ist eine Gebervorrichtung einer hydraulischen Fahrradbremse, beispielsweise einer hydraulischen Bremse bzw. einer hydraulischen Scheibenbremse oder hydraulischen Felgenbremse. Dargestellt ist nur die hydraulische Gebervorrichtung und die Hydraulikleitung 100, die zu der nicht dargestellten hydraulischen Nehmervorrichtung führt und deren Aufbau dem Fachmann bekannt ist.

Die hydraulische Gebervorrichtung 1 umfasst einen Hydraulikzylinder 80, der in dem Lenkerrohr 20 des lenkergeführten Fahrzeuges integriert ist.

Das Lenkerrohr 20 umfasst eine Öffnung 21, durch die ein Druckstück 50 verläuft, das drehgelenkig an einer Aufnahme 40 angeordnet ist, die an dem Lenkerrohr 20 befestigt ist.

Die hydraulische Gebervorrichtung 1 umfasst einen Hebel 10, der an der Aufnahme 40 drehgelenkig angeordnet ist. Die Drehachse 41 für das Druckstück 50 und den Hebel 10 ist bei der dargestellten Ausführung identisch.

Des Weiteren ist eine Griffweitenverstelleinrichtung 44 vorgesehen, mit der die Anfangsstellung des Hebels 10 in der Ruhestellung verändert werden kann. Die Aufnahme 40 ist mit einer Schelle 42 an dem Lenkerrohr 20 befestigt. Ein optionaler Adapter 43 ist an der Schelle 42 vorgesehen, um eine nicht dargestellte Schalteinrichtung aufnehmen zu können.

In dem Lenkerrohr 20 ist eine Verschiebeeinrichtung 60 vorgesehen, die in dem Lenkerrohr 20 entlang der Längsrichtung des Lenkerrohrs 20 verschiebbar angeordnet ist. Die Verschiebeinrichtung 60 kann als Kulisse ausgebildet sein. Die Verschiebeeinrichtung 60 umfasst einen Durchgang 61, in dem eine Zugeinrichtung 70 aufgenommen ist, und einen Durchgang 62, durch den die Hydraulikleitung 100 verläuft.

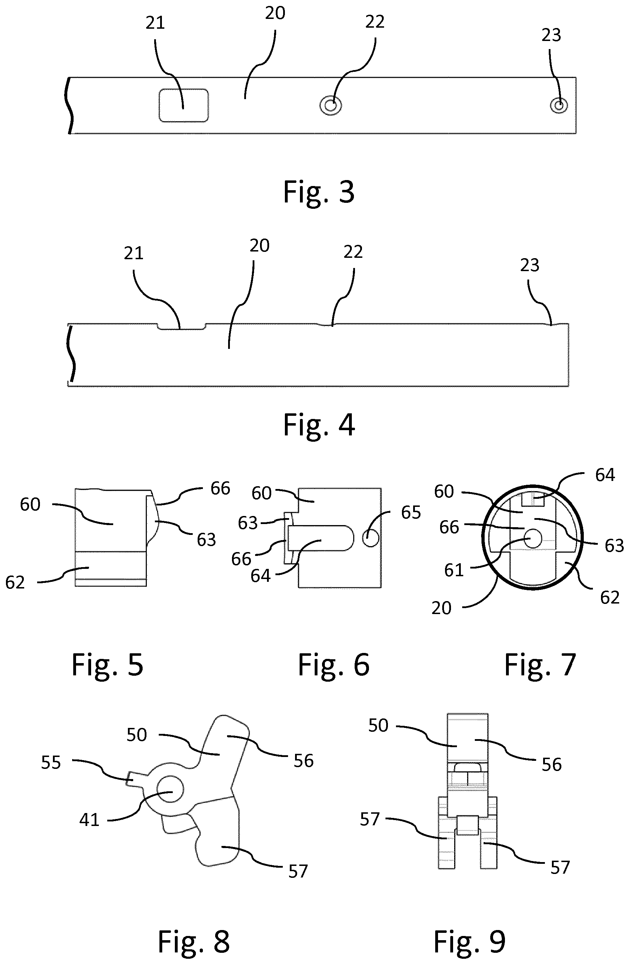

Die Fig. 5 bis 7 zeigen die Verschiebeinrichtung 60 und die Figuren 8 bis 9 zeigen das Druckstück 50. Durch die im Folgenden beschriebene Ausgestaltung ist die Verschiebeeinrichtung 60 in dem Lenkerrohr 20 gegen ein Verdrehen gesichert. Eine Verdrehsicherung kann deshalb wichtig sein, weil die Hydraulikleitung 100 infolge von Verwindungen bei der Montage ein Drehmoment auf die Verschiebeeinrichtung 60 insbesondere dann ausüben könnte, wenn die Hydraulikleitung durch den Durchgang 62 verlegt wird.

Zur Verdrehsicherung weist die Verschiebeinrichtung 60 weist einen Steg 63, der von zwei Fortsätze 57 des Druckstücks 50 aufgenommen wird. Dadurch wird erreicht, dass sich die Verschiebeeinrichtung 60 gegenüber dem Druckstück 50 nicht in Umfangsrichtung des Lenkerrohrs 20 verdrehen kann.

Die Verschiebeeinrichtung 60 umfasst eine Nut 64, in die das Druckstück 50 bei der Betätigung der Hydraulikeinheit eintauchen kann.

Bei der Betätigung des Hebels 10 wird das Druckstück 50 um die Drehachse 41 gedreht und verschiebt die Verschiebeeinrichtung 60 in Richtung Fahrzeugmitte, d.h. in Figur 1 nach links. Bei der dargestellten Ausführung ist die Zugeinrichtung 70 als Zugstange ausgebildet. Die Zugeinrichtung 70 weist einen Kopf 71 auf, an dem die Verschiebeeinrichtung 60 angreift und die Zugeinrichtung 70 bei der Betätigung des Hebels 10 nach links verschiebt. Die Zugeinrichtung 70 weist einen Hauptkörper 72 und eine Verschraubung 73 auf. Die Verschraubung 73 wirkt als Kolben der Gebervorrichtung 1 und ist in dem Hydraulikzylinder 80 angeordnet. Sie wird mit einer Schraube 74 gesichert. Bei der Betätigung des Hebels 10 wird die Schraube 74 entgegen der Kraft einer Rückstellfeder 81 nach links gedrückt. Die Rückstellfeder 81 ist in dem Druckraum 82 des Geberzylinders 80 angeordnet.

Rechts von dem Geberzylinder 80 ist ein Ausgleichsbehälter 90 bzw. Vorratsbehälter für Hydraulikfluid vorgesehen. Der Ausgleichsbehälter 90 wird nach außen durch das Griffrohr 20 begrenzt. Zum Lenkerende ist der Ausgleichsbehälter durch einen Deckel 92 mit einem Balg 91 begrenzt. Der Balg 91 trennt das Hydraulikfluid in dem Ausgleichsbehälter 90 von einem Gas bzw. Luftvolumen zum Ausgleich von in den Druckraum nachströmenden Hydraulikfluid. Bei den Ausführungen mit einem Luftvolumen innerhalb des Balgs ist dieses über eine Entlüftungsbohrung 98 mit der Außenluft verbunden. In dem Deckel 92 ist eine Öffnung 93 mit einer Entlüftungsschraube 94 vorgesehen. In der Öffnung 93 ist ein Konus 95 vorgesehen, damit eine handelsübliche Spritze eingeführt werden kann, um Hydraulikfluid in den Ausgleichsbehälter einbringen bzw. daraus abziehen zu können. Der Deckel 92 ist mit einer Schraube 33 gegen Drehung gesichert, die in einer Öffnung 23 in dem Griffrohr 20 angeordnet ist und in die Verschraubung 73 geschraubt ist.

Außerhalb des Lenkerrohrs 20 ist ein Griffrohr 30 vorgesehen, das beispielsweise aus einem elastischen Gummimaterial ausgebildet sein kann.

Der Zylinder 80 ist in dem Lenkerrohr 20 gegen Verrutschen und Drehung durch eine Schraube 32 gesichert, die in einer Öffnung 22 in dem Griffrohr angeordnet und in den Geberzylinder 80 geschraubt ist.

Der Ausgleichsbehälter 90 ist mit dem Druckraum 82 über einen Überlaufkanal 96 verbunden. An der Verschraubung 73 ist eine Primärdichtung 83 vorgesehen, die bei der Betätigung der Bremse den Überlaufkanal überfährt und den Druckraum 82 von dem Ausgleichsbehälter 90 trennt, so dass sich Druck in dem Druckraum 82 aufbauen kann.

Der Ausgleichsbehälter 90 ist gegenüber dem Innenraum des Lenkerrohrs 20 über eine Dichtung 97 abgedichtet, die zwischen dem Lenkerrohr 20 und dem Geberzylinder 80 angeordnet ist.

Eine weitere Dichtung 84 ist auf der Zugeinrichtung 70 vorgesehen und dichtet den Druckraum 82 gegen den Hauptkörper 72 der Zugeinrichtung 70 ab.

Bei der Betätigung der hydraulischen Gebervorrichtung 1 wird der Hebel 10 nach unten gedrückt, wodurch sich das Druckstück 50 um die Drehachse 41 entgegen der Verschiebeeinrichtung 60 bewegt wird und diese nach links schiebt. Dadurch wird die Zugeinrichtung 70 nach links bewegt und zieht den Kolben, d.h. bei dem Ausführungsbeispiel die Verschraubung 73, in den Hydraulikzylinder 80 (in Fig. 1 nach links). Dadurch baut sich ein Druck in dem Druckraum 82 auf und Hydraulik wird in die Hydraulikleitung 100 gepresst, die mit dem nicht dargestellten Hydrauliknehmer verbunden ist.

Die Verschiebeinrichtung 60 weist an dem Steg eine Kontur 66, über dessen Form je nach Wunsch ein progressiver und/oder degressiven Verlauf des Übersetzungsverhältnisses eingestellt werden kann. Wie in Fig. 5 gezeigt, ist die Kontur 66 des Stegs 63 im oberen Teil relativ weit rechts, geht noch ein wenig weiter nach rechts. Anschließend verjüngt sich der Steg 63, so dass die Kontur weiter links verläuft. Das hat zur Folge, dass das Übersetzungsverhältnis nicht ganz so stark bei zunehmender Betätigung abnimmt, wie bei einer Ausführung mit gerader Kontur. Das ist bei den Ausführungen der Erfindung vorteilhaft, die einen sehr niedrigen Drehpunkt haben, der ein hohes Übersetzungsverhältnis bedingt, das am Anfang der Betätigung unerwünscht ist, weil das Lüftspiel nahezu kraftfrei schnell, d.h. mit einem niedrigen Übersetzungsverhältnis, überfahren werden soll. Erst bei Druckaufbau ist ein hohes Übersetzungsverhältnis vorteilhaft. Durch die Kontur kann der Nachteil des niedrigen Drehpunkts zumindest teilweise ausgeglichen werden, so dass die Abnahme nicht so stark wie bei einer geraden Kontur ausfällt.

Die Hydraulikgebervorrichtung 1 weist eine Sensoreinrichtung 130 zum Erfassen der Stellung und/oder Betätigung der Hydraulikgebervorrichtung 1 auf. Das Signal der Sensorvorrichtung 130 kann beispielsweise dafür eingesetzt werden, die Betätigung der Hydraulikgebervorrichtung 1 anzuzeigen, indem das Aufleuchten eines Bremslichtes durch eine geeignete dem Fachmann bekannte Steuereinrichtung bewirkt wird. Alternativ oder zusätzlich kann das Erfassen der Stellung der Hydraulikgebervorrichtung 1 dazu benutzt werden, eine Rekuperationsvorrichtung einzuschalten, die das Bremsen unterstützt und gleichzeitig Energie in einen Speicher einspeist, der später zum Antrieb des Fahrzeugs verwendet werden kann. Die Rekuperationsvorrichtung kann beispielsweise eingeschaltet werden, sobald die Verbindung zwischen Druckraum 80 und Ausgleichsraum 90 unterbrochen wurde. Diese Funktion kann von dem Fahrer gezielt eingesetzt werden, um beispielsweise beim Bergabfahren eine reine Motorbremse durch die Rekuperation zu bewirken, und zwar bevor das Lüftspiel zwischen Bremsbelag und Bremsscheibe bzw. Felge vollständig überfahren worden ist.

Bei der Ausführung der Figuren 1 bis 9 umfasst die Sensoreinrichtung einen Wegsensor. In einer Aufnahme 65 der Verschiebeeinrichtung 60 ist ein Magnet 131 angeordnet. Am Lenkerrohr ist ein Hallsensor vorgesehen 132, der den Weg erfasst, den die Verschiebeeinrichtung 60 innerhalb des Lenkerrohrs 20 zurückgelegt hat. In Abhängigkeit der Geometrie des Geberzylinders wird die Verschiebeeinrichtung 60 zunächst von der Ruhestellung ca. 2-3 mm in das Lenkerrohr 20 verschoben, bis die Verbindung zwischen Druckraum 82 und dem Ausgleichsraum 90 unterbrochen wird. Bei der weiteren Betätigung wird die Verschiebeeinrichtung 60 weitere 5-6 mm in das Lenkerrohr 20 verschoben, wobei das Lüftspiel zwischen den Bremsbelägen und der Bremsscheibe bzw. der Felge überfahren wird. In diesem Bereich der Teilbetätigung, d.h. nach der Trennung zwischen Druckraum 82 und dem Ausgleichsraum 90, aber vor dem Überfahren des Lüftspiels zwischen den Bremsbelägen und der Bremsscheibe bzw. der Felge, d.h. vor dem Einsetzen der Bremswirkung, kann es vorteilhaft sein, bereits eine leichte Bremswirkung zu bewirken, wenn das Fahrzeug über einen Elektroantrieb verfügt. Das Signal der Sensoreinrichtung kann dann verwendet werden, die Rekuperation einzuschalten, die eine Bremswirkung umfasst und gleichzeitig die Bremsenergie in das System zurückführen kann, um den Energiespeicher aufzuladen. Auch bei einer Vollbetätigung mit einer Bremswirkung durch die Hydraulikvorrichtung kann eine Unterstützung der Bremse durch das Einschalten der Rekuperation vorteilhaft bzw. wünschenswert sein.

Zusätzlich oder alternativ zu der Sensoreinrichtung 130 zum Erfassen der Stellung und/oder Betätigung der Hydraulikgebervorrichtung 100 kann die Erfassung des Drucks in dem Druckraum 82 herangezogen werden. Beispielsweise kann die Rekuperationsvorrichtung eingeschaltet werden, sobald der Druck in dem Druckraum 82 einen bestimmten Schwellwert überschreitet. Das Überschreiten des Schwellwerts kann anzeigen, dass eine Bremswirkung durch die Hydraulikvorrichtung 1 erreicht wird. Auch dieser Wert kann beispielsweise verwendete werden, um ein Bremslicht anzuschalten bzw. bei unterschreiten eines etwas kleineren Schwellwerts wieder auszuschalten. Die Rekuperation kann ebenfalls bei Unterschreiten eines kleineren Schwellwerts ausgeschaltet werden, der etwas kleiner als der für das Einschalten verwendete Schwellwert ist. Alternativ oder zusätzlich kann das Ausschalten auch bei Erreichen der Ruhestellung bewirkt werden.

In dem Griffrohr 30 kann eine Anzeige 140 vorgesehen sein, um den Füllstand des Ausgleichsraums 90 anzuzeigen. Die Anzeige 140 kann über eine geeignete Leitung oder mehrere geeignete Leitungen mit dem Ausgleichsraum 90 verbunden sein und als durchsichtige bzw. durchscheinende Leitung ausgebildet sein, um den Füllstand anzuzeigen. Alternativ oder zusätzlich kann ein geeigneter Sensor den Füllstand im Ausgleichsraum erfassen und die Anzeige entsprechend ansprechen. In diesem Fall kann die Anzeige beispielsweise eine Reihe von optischen Anzeigen, beispielsweise LED-Lampen umfassen. Andere dem Fachmann bekannte und geeignete Anzeigen sind denkbar.

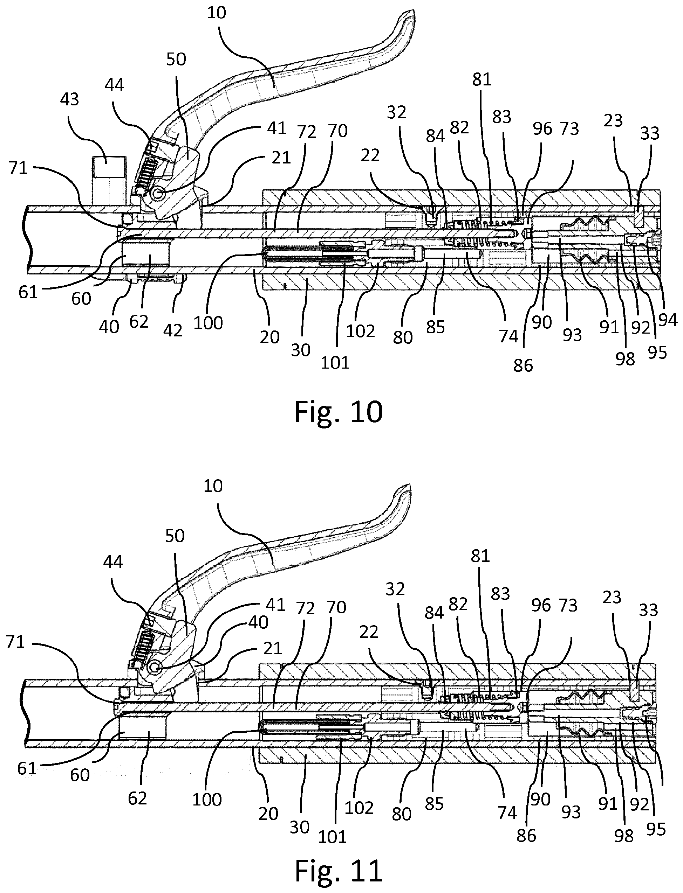

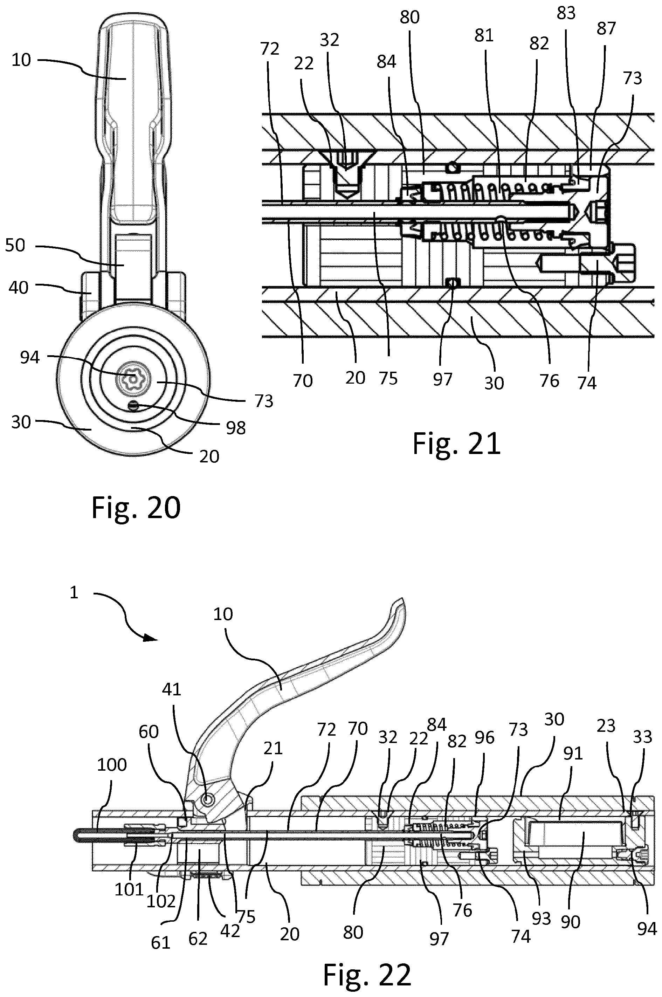

Fig. 10 und Fig. 20 zeigen eine alternative Ausführungsform der Erfindung, die im Wesentlichen der in den Figuren 1 bis 9 gezeigten Ausführungsform der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Der Geberzylinder 80 umfasst einen Fortsatz 86, der sich zum Ende des Lenkerrohrs 20 erstreckt und in dem der Ausgleichsbehälter 90 aufgenommen ist. Der Fortsatz 86 weist einen Außendurchmesser auf, der im Wesentlichen dem Innendurchmesser des Lenkerrohrs 20 entspricht. Da der Ausgleichsbehälter in dem Fortsatz 86 aufgenommen ist, kann die Dichtung 97 der in den Figuren 1 bis 3 gezeigten Ausführung entfallen. Diese Ausführung hat den Vorteil, dass sie als Einheit, die den Ausgleichsbehälter 90 umfasst, in ein Lenkerrohr eingebaut werden kann.

Fig. 11 zeigt eine alternative Ausführungsform der Erfindung, die im Wesentlichen den in den Figuren 1 bis 9 bzw. 10 und 20 gezeigten Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Die Aufnahme 40 ist in das Lenkerrohr 20 integriert. Die Schelle 42 und der Adapter entfallen somit. Die Schalteinheit kann auf eine dem Fachmann bekannte Weise auf dem Lenkerrohr 20 angebracht werden. Da die Hydraulikgebervorrichtung 1 erfindungsgemäß bis auf den Hebel 10 und damit verbundene Komponenten fast vollständig in dem Lenkerrohr 20 aufgenommen ist, ist ausreichend Platz für die Montage der Schalteinheit oder anderer Bauteile vorhanden.

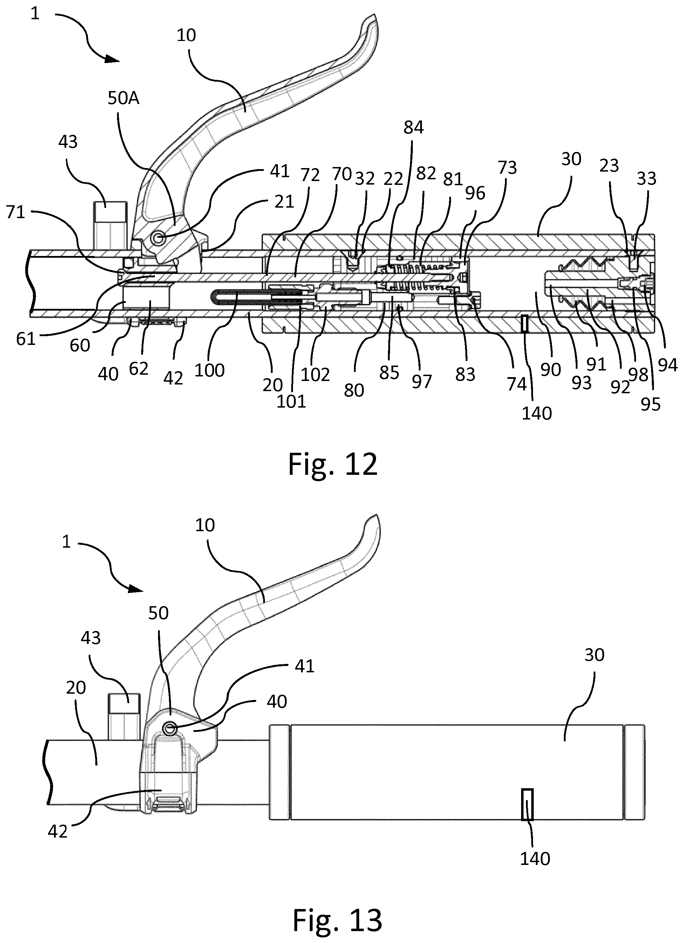

Fig. 12 und Fig. 13 zeigen eine alternative Ausführungsform der Erfindung, die im Wesentlichen der in den Figuren 1 bis 9 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist der Hebel 10 einteilig ausgebildet. Das Druckstück 50 der anderen Ausführungen ist in den Hebel 10 integriert. Der Hebel 10 wird mit seinem dem Druckstück entsprechenden Druckstückabschnitt 50A auf die Verschiebeinrichtung 60. Die Griffweiteneinstelleinrichtung 44 ist bei dieser Ausführung nicht vorhanden. Die Griffweite kann beispielsweise durch den Einsatz verschiedener Hebel oder auf andere dem Fachmann bekannte Weisen verändert werden.

Diese Ausführung hat ebenso wie die entsprechenden anderen Ausführungen der Erfindung, dass Beispielsweise die Griffweiteneinstellung dadurch erfolgen kann, dass die Aufnahme 40 mit dem Hebel 10 gegenüber der Verschiebeeinrichtung 60 verstellt bzw. verschoben wird, so dass sich die Griffweite wegen des Eingriffs zwischen dem Druckstückabschnitt 50A des Hebels 10 und der Verschiebeeinrichtung 60 verstellt. Dazu kann die Aufnahme 40 durch Lösen der Schelle 42 gelockert, dann entlang des Lenkerrohrs 20 in die gewünschte Stellung verschoben und schließlich durch Festziehen der Schelle 42 in der neuen Stellung fixiert werden.

Der Druckstückabschnitt 50A weist entsprechend der Ausführung der Figuren 1 bis 9 zwei Fortsätze 57 auf, die den Steg 63 zur Verdrehsicherung der Verschiebeeinrichtung 60 aufnehmen.

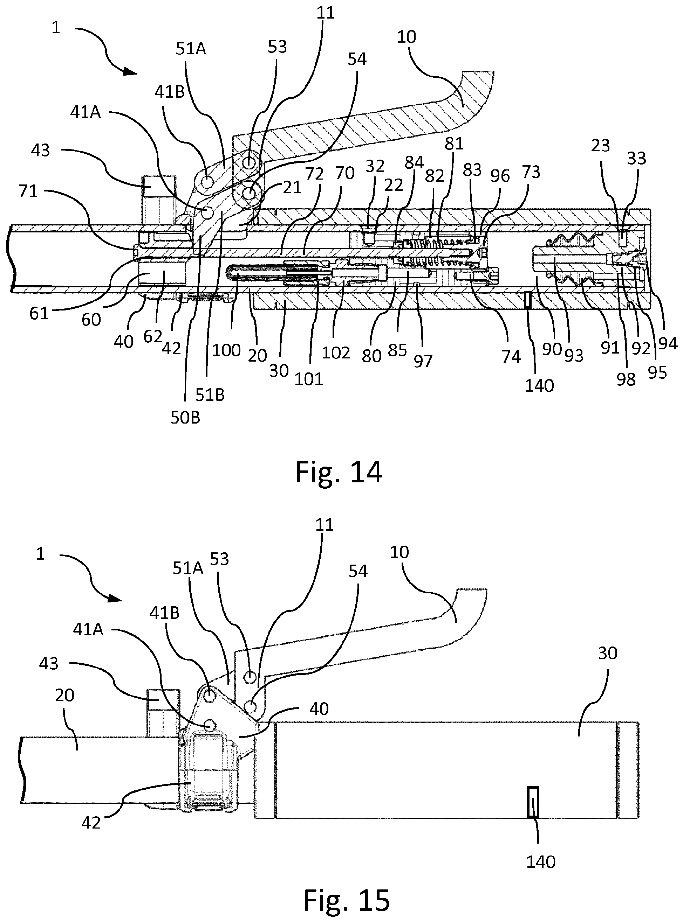

Fig. 14 und 15 zeigen eine alternative Ausführungsform der Erfindung, die im Wesentlichen der in den Figuren 1 bis 9 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Der Hebel 10 und das Druckstück 50B sind über zwei Drehpunkte 41A und 41B und einen Arm 51A an der Aufnahme 40 angelenkt. Der Hebel weist einen Armabschnitt 11 und das Druckstück 50B weist einen Armabschnitt 51B auf. Der Arm 51 ist über die Drehachse 41B an der Aufnahme 40 angelenkt und über die Drehachse 53 mit dem Hebel 10 verbunden. Das Druckstück 50B ist über die Drehachse 41A an der Aufnahme angelenkt und über die Drehachse 54 mit dem Armabschnitt 11 des Hebels verbunden.

Durch die vier Drehachsen 41A, 41B, 53 und 54 ist ein Parallelogramm definiert, dessen Seiten durch die Aufnahme 40, den Arm 51A, den Armabschnitt 51B und den Armabschnitt 11 gebildet werden.

Die Aufnahme 40 bildet eine feste Seite. Bei der Betätigung des Hebels drehen sich der Arm 51A und der Armabschnitt 51B nach unten und der Armabschnitt 11 des Hebels bewegt sich nach unten. Der Hebel 10 bewegt sich somit im Wesentlichen parallel auf das Lenkerrohr 20 zu und erfährt gleichzeitig eine leichte Bewegung in Längsrichtung des Griffrohrs, die von der Neigung des Armes 51A und des Armabschnitts 51B abhängt. Gleichzeitig wird das Druckstück 50B um die Drehachse 41A gedreht und betätigt die Hydraulik auf die oben beschriebene Weise durch die Verschiebung der Verschiebeeinrichtung in das Lenkerrohr (in Fig. 8 nach links).

Durch diese Konstruktion lässt sich eine angenehme und leichte Handhabung der Hydraulikgebervorrichtung realisieren.

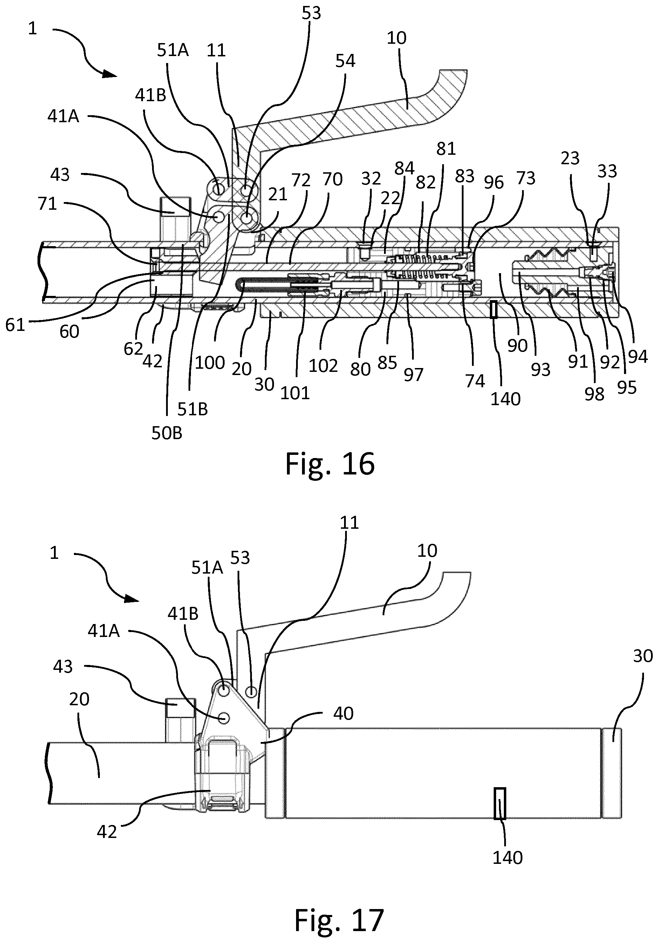

Die Figuren 16 und 17 zeigen eine alternative Ausführungsform der Erfindung, die im Wesentlichen der in den Figuren 14 und 15 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist die Anlenkung des Hebels 10 in der Ruhestellung so gewählt, dass der Arm 51A und der Armabschnitt 51B des Druckstücks 50B nahezu parallel zu dem Griffrohr 20 verläuft. Dadurch wird der Hebel 10 bei der Betätigung von Anfang nur in Richtung Fahrzeugmitte und nicht nach außen bewegt. Das hat den Vorteil, dass bei der Betätigung der Hydraulikgebervorrichtung die nicht verwendeten Finger **(z.B.** bei einer Zwei- oder Einfingerbetätigung) nicht so leicht zwischen den Hebel und das Lenkerrohr geraten können.

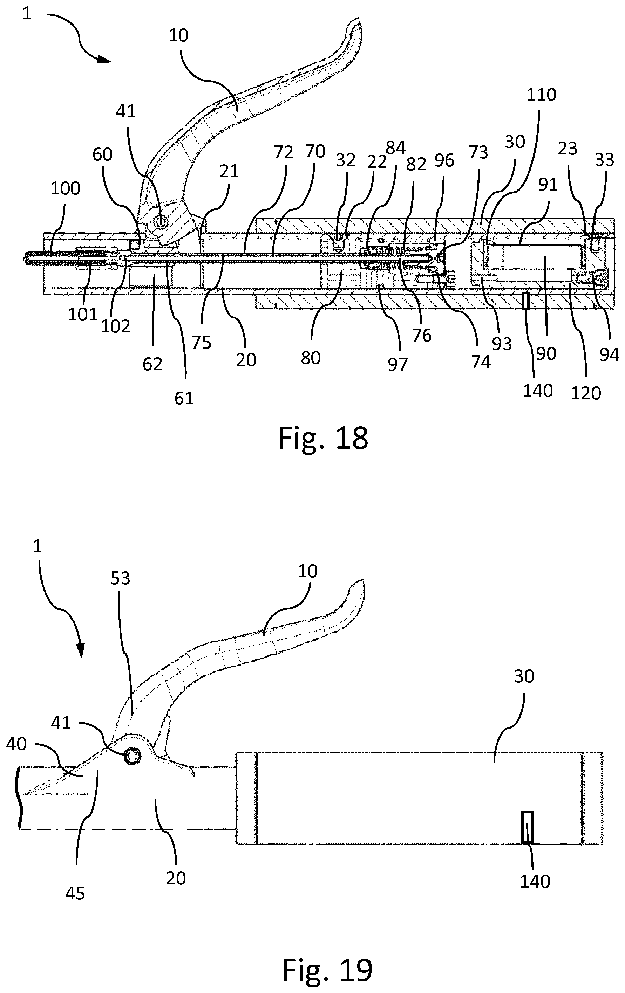

Die Figuren 18 bis 21 zeigen eine alternative Ausführungsform der Erfindung, die im Wesentlichen der in den Figuren 1 bis 3 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist in der Zugeinrichtung 70 eine Hydraulikkanal 75 vorgesehen, die von dem Druckraum 82 durch die Verschiebeinrichtung 60 zu dem Anschlussstutzen 102 verläuft. Anstelle einer Zugstange ist somit ein Zugrohr vorgesehen, das als Hydraulikkanal 75 eingesetzt wird. Der Hydraulikkanal 75 ist über eine Öffnung 76 mit dem Druckraum 82 verbunden. Diese Ausführung hat den Vorteil, dass der Durchgang 62 nicht für die Hydraulikleitung verwendet wird und daher im Durchgang 62 Raum für andere Leitungen vorhanden ist, die insbesondere bei E-Bikes für andere Aufgaben erwünscht sind.

Bei dieser Ausführung ist die Aufnahme 40 in das Lenkerrohr 20 integriert. An dem Lenkerrohr sind zwei Laschen 45 ausgebildet, in denen eine Achse als Drehachse 41 für den Hebel 10 aufgenommen ist.

Der Ausgleichsraum 90 weist ein Ausgleichsgehäuse 120 auf. Der Ausgleichraum 90 ist der Raum zwischen dem Geberzylinder 80 und dem Ausgleichsgehäuse 120 und dem Raum in dem Ausgleichsgehäuse 120 sowie den entsprechenden Verbindungsleitungen, wie dem Durchgang 93.

Der Ausgleichsraum 90 ist hier nicht rotationssymmetrisch, sondern weist an der oberen Seite die Entlüftungsschraube 94 und den Durchgang 93 auf. Obere Seite ist in diesem Zusammenhang, die Seite, des Lenkerrohrs, die beim aufrechten Fahrzeug oben ist. Bei Fig. 18 ist das die untere Seite, denn der Hebel wird üblicherweise schräg nach unten montiert, um eine bequeme und natürliche Haltung bei der Betätigung zu ermöglichen.

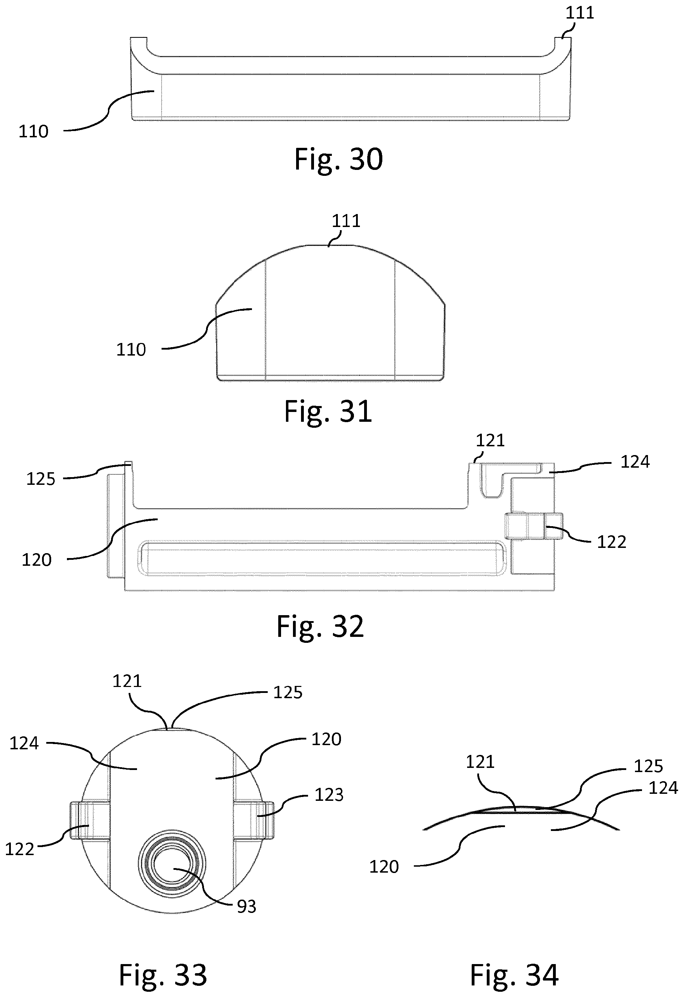

Auf der bezogen auf die Orientierung im Betrieb unteren Seite (In Fig. 18 oben) ist der Balg 91 vorgesehen, der mit einem Rahmen 110 in das Ausgleichsgehäuse 120 des Ausgleichsbehälters 90 gepresst ist. Der Rahmen kann entsprechend dem in den Figuren 30 und 31 gezeigten Rahmen aufgebaut sein.

Diese Orientierung des Ausgleichsraums mit der Entlüftungsschraube 94 auf der oberen Seite hat den Vorteil, dass die Entlüftung des Systems leicht und sicher durchgeführt werden kann. Nachteilig für die Betriebssicherheit könnte jedoch sein, dass der Durchgang entsprechend auf der oberen Seite angeordnet ist, weil sich dort eventuell Luft bzw. Gas sammeln könnte. Um diesen Nachteil zu vermeiden, könnte der Durchgang 93 gegenüber der Entlüftungsschraube 94 verdreht, d.h. an einer weiter unten liegenden Stelle des Ausgleichsgehäuses 120 angeordnet werden.

Die Figuren 22 und 20 zeigen eine alternative Ausführungsform der Erfindung, die im Wesentlichen der in den Figuren 18 bis 21 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist die Aufnahme 40 mit einer Schelle 42 an dem Lenkerrohr befestigt. Das hat den Vorteil, dass die Griffweite über die Einstellung der Position der Aufnahme 40 gegenüber der Verschiebeeinrichtung 60 eingestellt werden kann.

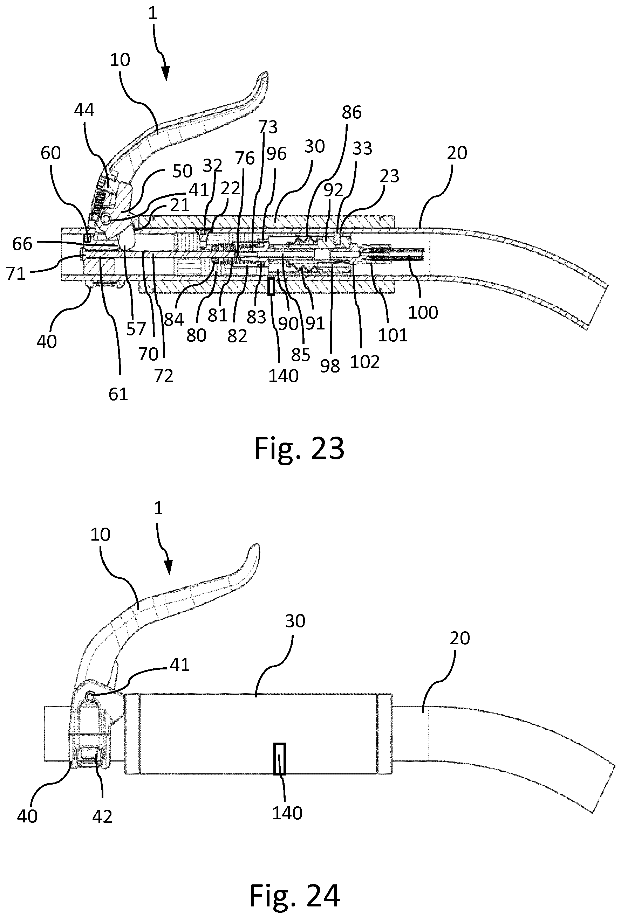

Die Figuren 23 bis 24 zeigen eine alternative Ausführungsform der Erfindung, die im Wesentlichen der in den Figuren 1 bis 3 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei der Ausführungsform der Figuren 23 und 24 ist das Griffrohr 30 bezogen auf den Hebel 10 und die Aufnahme 40 näher zur Fahrzeug- bzw. Lenkermitte angeordnet. Mit anderen Worten ist der Hebel 10 an der äußeren Seite des Lenkerrohrs 20 angeordnet.

Der Kopf 71 der Zugeinrichtung 70 ist daher von der Außenseite des Lenkerrohrs 20 erreichbar, so dass die Griffweite des Hebels 10 durch Veränderung der Länge der Zugstange (Hauptkörper 72) eingestellt werden kann. Beispielsweise könnte der Kopf 71 als eine Schraube ausbildet sein, die auf einen Gewindeabschnitt der Zugstange aufgeschraubt ist, so dass durch verdrehen des Kopfs 71 die Griffweite eingestellt werden kann.

Die den Kolben des Geberzylinders 80 bildende Verschraubung 73, an dem die Zugeinrichtung 70 angreift, weist einen Stutzen 731 auf, der sich in den Ausgleichsraum 90 erstreckt, der in Richtung Fahrzeugmitte angeordnet ist. In dem Stutzen 731 ist eine Druckleitung 85 angeordnet, die über eine Öffnung 76 mit dem Druckraum 82 in Verbindung steht.

Die Druckleitung 85 verläuft durch den Ausgleichsraum 90 und ist an eine Hydraulikleitung 100 angeschlossen.

Die Verschiebeeinrichtung 60 ist an der Außenseite des Lenkerrohrs 20 angeordnet. Durch Verschieben der Aufnahme 40 auf dem Lenkerrohr 20 kann die griffweite eingestellt werden. Alternativ kann auch die Zugeinrichtung 70 in der Verschiebeeinrichtung 60 verstellt werden, in dem der Kopf 71, der als Schraube ausgebildet sein kann, gegenüber dem Hauptkörper 72 verstellt wird, bzw. der Hauptkörper in der Verschraubung 73 verdreht wird.

Der Geberzylinder 80 ist relativ zu der Verschiebeeinrichtung 60 weiter in Richtung Fahrzeugmitte bzw. zwischen der Verschiebeeinrichtung 60 und dem Ausgleichsraum 90 angeordnet.

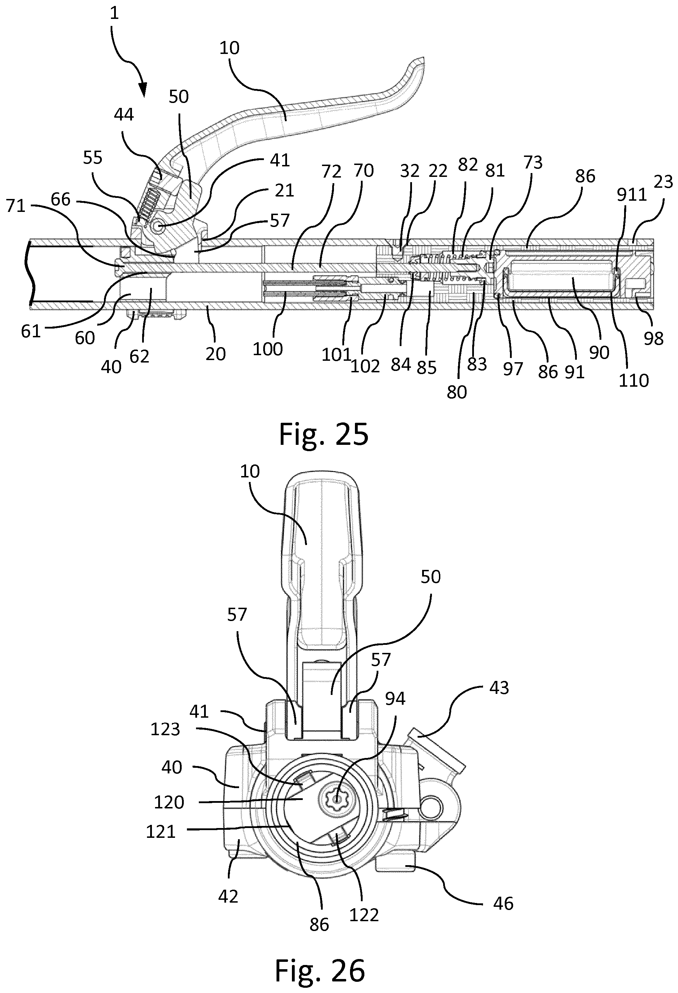

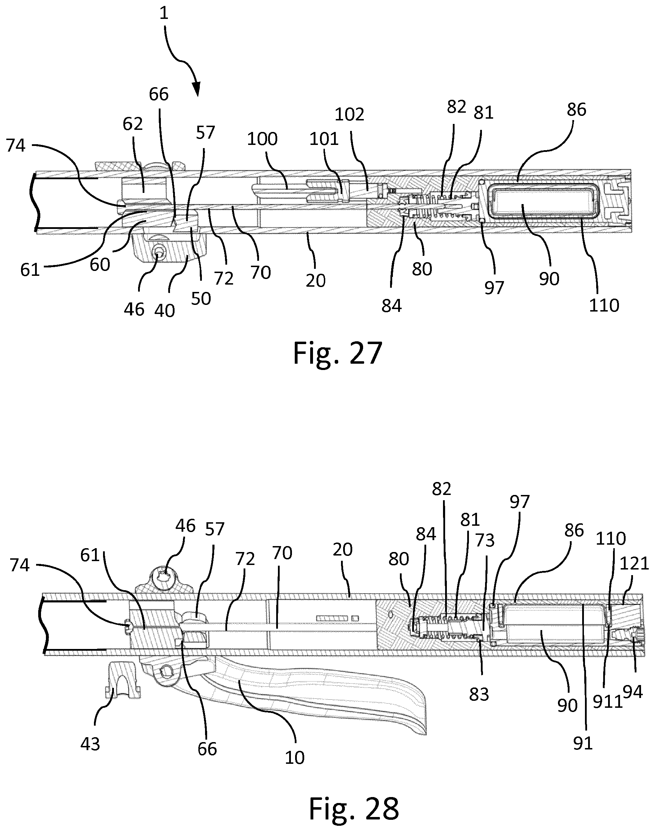

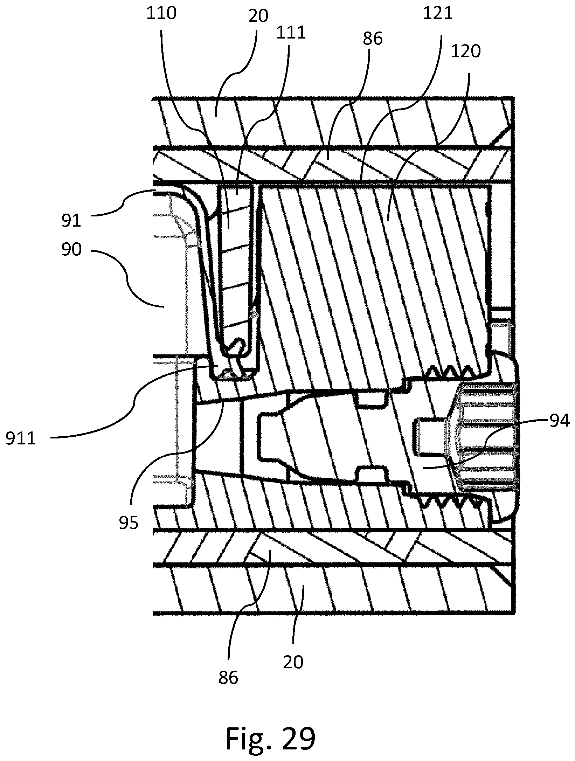

Die Figuren 25 bis 34 zeigen eine alternative Ausführungsform der Erfindung, die im Wesentlichen der in der Figur 22 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist die Entlüftungsschraube 94 unten angeordnet. Das hat zwar den Nachteil, dass das Fahrzeug für eine möglichst sichere Entlüftung umgedreht oder auf die Seite gelegt bzw. angeordnet werden sollte, damit die Entlüftungsschraube 94 zum Entlüften möglichst weit oben angeordnet ist. Diese Ausführung hat aber den Vorteil einer höheren Betriebssicherheit, weil der Durchgang 93 weiter unten liegt und daher die Wahrscheinlichkeit, dass dort Luft bzw. Gas vorhanden ist, relativ gering ist.

Der Geberzylinder 80 weist wie die Ausführung der Figuren 10 bis 11 einen Fortsatz 86 auf, in dem der Ausgleichraum 90 aufgenommen ist, so dass der Geberzylinder 80 mit dem Ausgleichsraum 90 als vormontierte Einheit in das Lenkerrohr 20 eingebracht werden kann. Der Ausgleichsraum 90 umfasst bzw. besteht aus einem Ausgleichsgehäuse 120 mit dem Balg 91, der mit einem Rahmen 110 in dem Ausgleichsgehäuse 120 an seinem Wulst 911 gesichert ist. Das Ausgleichsgehäuse ist in dem Fortsatz 86 des Geberzylinders 80 angeordnet und mit zwei Schnappeinrichtungen 122, 123 in dem Fortsatz 86 gesichert, die in entsprechende Öffnungen einrasten, sobald das Ausgleichsgehäuse 120 weit genug in den Fortsatz eingeschoben worden ist.

Das Ausgleichsgehäuse 120 weist eine dem Geberzylinder 80 bzw. der Verschraubung 73 zugewandte Stirnseite 125 und eine dem Geberzylinder 80 bzw. der Verschraubung 73 abgewandte Stirnseite 124 auf, die eine Abflachung 121 aufweist. Die Abflachung sorgt für eine Verbindung von der Oberseite des Balgs 91 nach außen, so dass sich der Balg möglichst kräftefrei in den Ausgleichsraum hinein und daraus heraus bewegen kann, d.h. dass die Bewegung nicht gegen einen sich aufbauenden bzw. abbauenden Druck erfolgen muss. Der Rahmen 110 weist an seiner nach außen weisenden Stirnseite eine entsprechende Abflachung 111 auf.

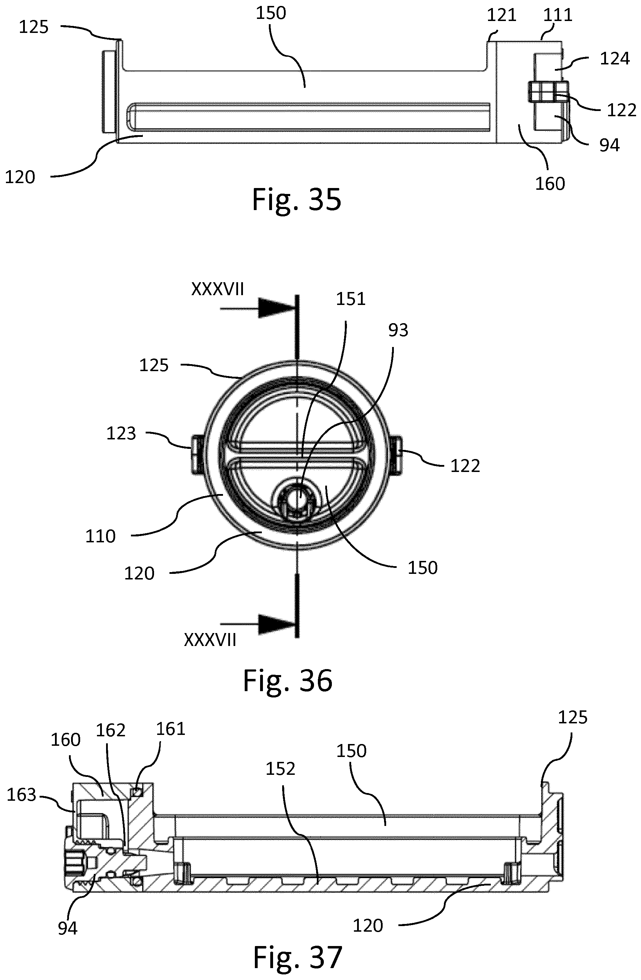

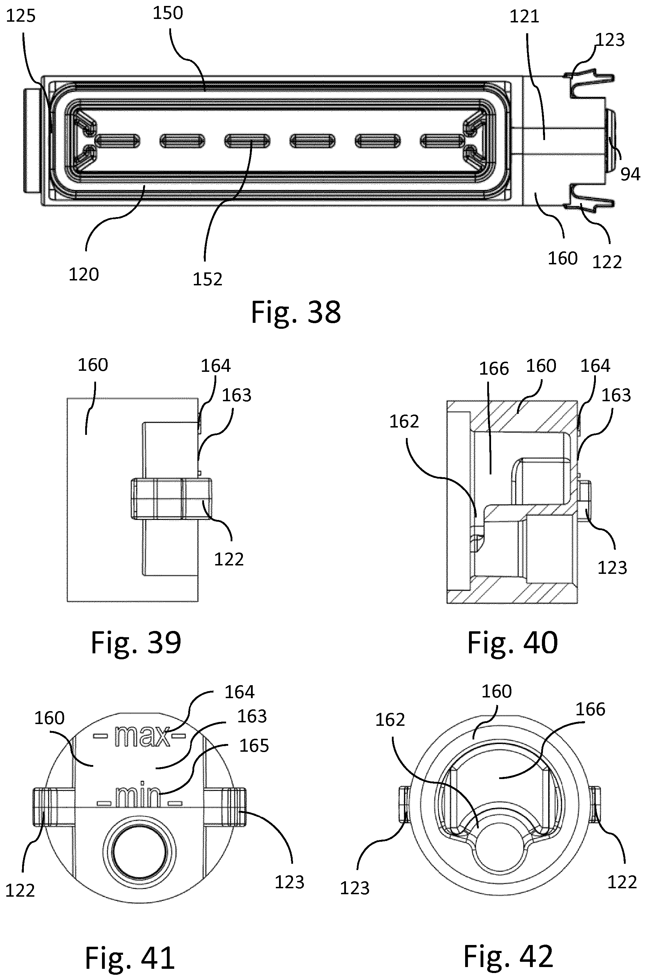

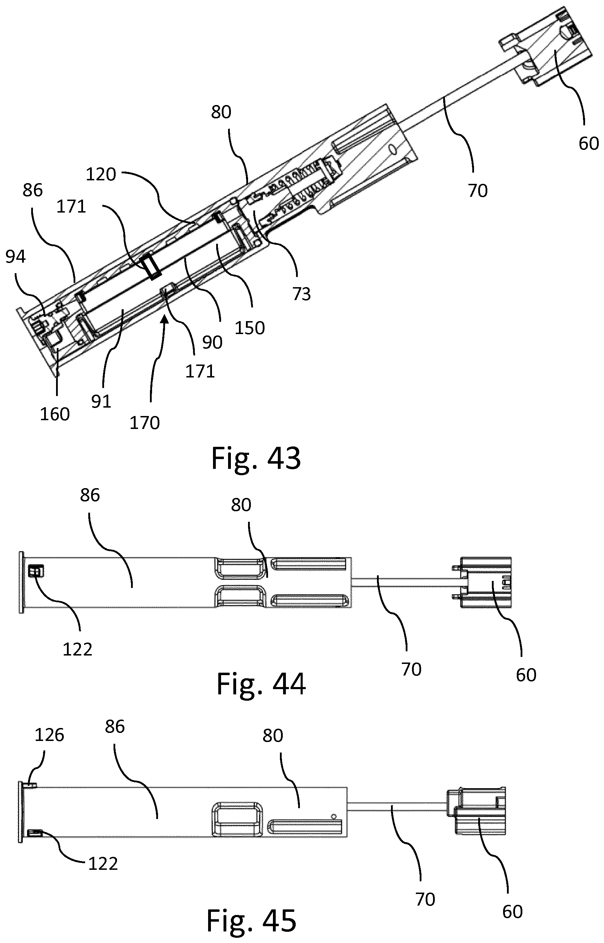

Die Figuren 35 bis 45 zeigen eine alternative Ausführungsform der Erfindung, die im Wesentlichen der in der Figur 25 bis 34 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Das Ausgleichsgehäuse 120 ist zweigeteilt ausgeführt. Das hat bei einer Fertigung in Spritzgusstechnik einen Vorteil, wenn eine Füllstandsanzeige am Lenkerende vorgesehen werden soll. Alternativ kann das Ausgleichsgehäuse 120 auch einteilig mit einer Füllstandsanzeige am Lenkerende ausgeführt werden, wenn es mit anderen Fertigungsverfahren, wie beispielsweise Rapid-Prototyping wirtschaftlich herstellbar ist. Das dargestellte zweiteilige Ausgleichsgehäuse weist einen Ausgleichsabschnitt 150 und einen Anzeigeabschnitt 160 auf, die stirnseitig miteinander verbunden sind. In dem Übergangsbereich ist eine Dichtung 161 vorgesehen, die beispielsweise als O-Ring ausgeführt sein kann. An dem Ausgleichsabschnitt ist stirnseitig ein Steg 151 oberhalb des Durchgangs 93 vorgesehen, wie in Fig. 36 gezeigt.

Der Anzeigeabschnitt 160 steht mit dem Ausgleichsabschnitt 150 über einen Durchgang 162 in Fluidverbindung, der an der Entlüftungsschraube 94 vorbei ausgebildet ist. Dadurch ist der Anzeigeabschnitt 160 in dem Bereich 166 entsprechend dem Füllstand in dem Ausgleichsabschnitt 150 gefüllt, so dass der Füllstand durch die transparent ausgebildete Stirnwand 163 abgelesen werden kann. Zur Orientierung bzw. zum einfachen Ablesen können wie beim Ausführungsbeispiels an der Stirnwand 162 Markierungen 163 bzw. 164 vorgesehen sein, die beispielsweise das Erreichen eines maximalen bzw. minimalen Füllstands anzeigen.

Am Boden des Ausgleichsbehälters 150 können Vorsprünge 152 vorgesehen sein, auf denen sich der Balg 91 abstützen kann, wenn die Hydraulikgebervorrichtung beispielsweise zum Befüllen evakuuiert wird.

Alternativ oder zusätzlich zu der optischen Füllstandsanzeige in dem Anzeigeabschnitt 160 bzw. der Anzeige 140 der anderen Ausführungsbeispiele kann auch eine Sensoreinrichtung 170 zur Erfassung des Füllstands in dem Ausgleichsraums 90 vorgesehen sein. Beispielsweise kann ein Magnet 171 am dem Balg 91 vorgesehen sein, dessen relative Lage mit einem Sensor 172 erfasst wird. Je nach Füllstand der Ausgleichsraums 90 wird der Balg 91 durchhängen. Daher kann der Magnet 171 vorteilhafterweise in der Mitte des Balgs angeordnet sein, um eine möglichst Lageänderung in Abhängigkeit von dem Füllstand zu erfahren. Der Magnet kann auf eine geeignete Weise an dem Balg 91 angeordnet sein. Beispielsweise kann der Magnet 171 in einer Tasche aufgenommen sein, die an dem Balg ausgebildet ist. Alternativ kann der Magnet 171 auch durch Umspritzen des Balges an dem Balg fixiert sein. Verkleben oder ein anderes geeignetes Befestigungsverfahren ist denkbar. Eine derartige Sensorvorrichtung zur Erfassung des Füllstandes des Ausgleichsraums kann auch bei den anderen Ausführungsbeispielen vorgesehen sein.

An dem Fortsatz 86 ist Steg 126 bzw. eine Rippe vorgesehen, die als Verdrehsicherung in eine entsprechende am Ende des Lenkerrohrs vorgesehene Aussparung angeordnet werden kann.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Hydraulikgebervorrichtung (1) für eine hydraulische Bremse oder Kupplung lenkergeführter Fahrzeuge mit einem Hebel (10), der in einer Aufnahme (40) drehgelenkig angeordnet ist, und einem Hydraulikzylinder (80), der in einem Lenkerrohr (20) des lenkergeführten Fahrzeugs anordbar ist, wobei die Hydraulikgebervorrichtung (1) eine Zugeinrichtung (70) aufweist, die bei der Betätigung des Hydraulikgebervorrichtung (1) eine Zugkraft auf den Kolben (73) des Hydraulikzylinders ausübt, **dadurch gekennzeichnet, dass** die Hydraulikgebervorrichtung (1) eine Verschiebeeinrichtung (60) aufweist, die in dem Lenkerrohr (20) des lenkergeführten Fahrzeugs in Längsrichtung des Lenkerrohrs (20) verschiebbar angeordnet ist.

2. Hydraulikgebervorrichtung (1) nach Anspruch 1, **dadurch gekennzeichnet, dass** die Zugeinrichtung (70) eine Zugstange umfasst.

3. Hydraulikgebervorrichtung (1) nach einem der vorhergehenden Ansprüche, **dadurch gekennzeichnet, dass** ein Hydraulikkanal (75) von dem Hydraulikzylinder (80) zu der Hydraulikleitung (100), die mit der zugeordneten Hydrauliknehmervorrichtung verbunden ist, in der Zugeinrichtung (70) angeordnet ist.

4. Hydraulikgebervorrichtung (1) nach einem der vorhergehenden Ansprüche, **dadurch gekennzeichnet, dass** die Verschiebeeinrichtung (60) mit der Zugeinrichtung (70) verbunden ist.

5. Hydraulikgebervorrichtung (1) nach einem der vorhergehenden Ansprüche, **dadurch gekennzeichnet, dass** der Hebel (10) an zwei Drehachsen (41A, (41B) angelenkt ist, an denen zwei an dem Hebel (10) drehgelenkig angeordnete Arme (51A, 51B) angreifen.

6. Hydraulikgebervorrichtung (1) nach Anspruch 5, **dadurch gekennzeichnet, dass** der eine Arm (51B) Teil eines Druckstücks (50B) ist.

7. Hydraulikgebervorrichtung (1) nach einem der vorhergehenden Ansprüche, **dadurch gekennzeichnet, dass** die Hydraulikgebervorrichtung (1) eine Griffweiteneinstellvorrichtung aufweist, mit der der Abstand zwischen der Aufnahme (40) für den Hebel (10) und dem Geberzylinder (80) zur Einstellung der Griffweite einstellbar ist.

8. Hydraulikgebervorrichtung (1) nach einem der vorhergehenden Ansprüche, **dadurch gekennzeichnet, dass** die Aufnahme (40) auf dem Lenkerrohr (20) verschiebbar angeordnet ist.

9. Hydraulikgebervorrichtung (1) nach einem der vorhergehenden Ansprüche, **dadurch gekennzeichnet, dass** der Geberzylinder (80) in dem Lenkerrohr (20) verschiebbar angeordnet ist.

10. Hydraulikgebervorrichtung (1) nach einem der vorhergehenden Ansprüche, **dadurch gekennzeichnet, dass** die Länge der Zugeinrichtung (70) einstellbar ist.

11. Hydraulikgebervorrichtung (1) nach einem der vorhergehenden Ansprüche, **dadurch gekennzeichnet, dass** die Zugeinrichtung eine Drehsicherung aufweist, die ein Verdrehen der Zugeinrichtung in dem Lenkerrohr verhindert bzw. einschränkt.

12. Hydraulikgebervorrichtung (1) nach einem der vorhergehenden Ansprüche, **dadurch gekennzeichnet, dass** die Hydraulikgebervorrichtung (1) einen in dem Lenkerrohr angeordneten Ausgleichsraum (90) aufweist.

13. Hydraulikgebervorrichtung (1) nach Anspruch 12, **dadurch gekennzeichnet, dass** der Geberzylinder (80) zwischen der Aufnahme (40) für den Hebel (10) und dem Ausgleichraum (90) angeordnet ist.

14. Hydraulikgebervorrichtung (1) nach einem der Ansprüche 12 bis 13, **dadurch gekennzeichnet, dass** der Geberzylinder (80) zwischen der Verschiebeeinrichtung (60) und dem Ausgleichraum (90) angeordnet ist.

15. Hydraulikgebervorrichtung (1) nach einem der Ansprüche 12 bis 14, **dadurch gekennzeichnet, dass** der Geberzylinder (80) einen Fortsatz (86) aufweist, in dem der Ausgleichsraum (90) angeordnet ist.

## Claims

1. Hydraulic master apparatus (1) for a hydraulic brake or clutch of handlebar-guided vehicles, comprising a lever (10), which is pivotally arranged in a support (40), and a hydraulic cylinder (80), which can be arranged in a handlebar tube (20) of the handlebar-guided vehicle, the hydraulic master apparatus (1) having a pulling device (70) which, when the hydraulic master apparatus (1) is actuated, exerts a pulling force on the piston (73) of the hydraulic cylinder, **characterized in that** the hydraulic master apparatus (1) has a shifting device (60), which is arranged in the handlebar tube (20) of the handlebar-guided vehicle so as to be movable in the longitudinal direction of the handlebar tube (20).

2. Hydraulic master apparatus (1) according to claim 1, **characterized in that** the puling device (70) comprises a pull rod.

3. Hydraulic master apparatus (1) according to any one of the preceding claims, **characterized in that** a hydraulic channel (75) from the hydraulic cylinder (80) to the hydraulic line (100) connected to the associated hydraulic slave apparatus is arranged in the pulling device (70).

4. Hydraulic master apparatus (1) according to any one of the preceding claims, **characterized in that** the shifting device (60) is connected to the pulling device (70).

5. Hydraulic master apparatus (1) according to any one of the preceding claims, **characterized in that** the lever (10) is hinged to two axes of rotation (41A, 41B), which are engaged by two arms (51A, 51B) pivotally arranged on the lever (10).

6. Hydraulic master apparatus (1) according to claim 5, **characterized in that** the one arm (51 B) is part of a pressure piece (50B).

7. Hydraulic master apparatus (1) according to any one of the preceding claims, **characterized in that** the hydraulic master apparatus (1) has a grip width adjusting apparatus, by means of which the distance between the support (40) for the lever (10) and the master cylinder (80) can be adjusted in order to adjust the grip width.

8. Hydraulic master apparatus (1) according to any one of the preceding claims, **characterized in that** the support (40) is movably arranged on the handlebar tube (20).

9. Hydraulic master apparatus (1) according to any one of the preceding claims, **characterized in that** the master cylinder (80) is movably arranged in the handlebar tube (20).

10. Hydraulic master apparatus (1) according to any one of the preceding claims, **characterized in that** the length of the pulling device (70) is adjustable.

11. Hydraulic master apparatus (1) according to any one of the preceding claims, **characterized in that** the pulling device has an anti-rotation member which prevents or restricts the twisting of the pulling device in the handlebar tube.

12. Hydraulic master apparatus (1) according to any one of the preceding claims, **characterized in that** the hydraulic master apparatus (1) has a compensating chamber (90) arranged in the handlebar tube.

13. Hydraulic master apparatus (1) according to claim 12, **characterized in that** the master cylinder (80) is arranged between the support (40) for the lever (10) and the compensating chamber (90).

14. Hydraulic master apparatus (1) according to any one of 12 to 13, **characterized in that** the master cylinder (80) is arranged between the shifting device (60) and the compensating chamber (90).

15. Hydraulic master apparatus (1) according to any one of claims 12 to 14, **characterized in that** the master cylinder has an extension (86) in which the compensating chamber (90) is arranged.

## Revendications

1. Dispositif émetteur hydraulique (1) pour un frein ou un accouplement hydraulique de véhicules guidés par guidon, comprenant un levier (10) qui est disposé de manière articulée en rotation dans un logement (40), et un vérin hydraulique (80) qui peut être disposé dans un tube de guidon (20) du véhicule guidé par guidon,
le dispositif émetteur hydraulique (1) comprenant un organe de traction (70) qui, lors de l'actionnement du dispositif émetteur hydraulique (1), exerce une force de traction sur le piston (73) du vérin hydraulique,
**caractérisé en ce que** le dispositif émetteur hydraulique (1) comprend un organe de déplacement (60) qui est disposé dans le tube de guidon (20) du véhicule guidé par guidon de manière à pouvoir être déplacé dans la direction longitudinale du tube de guidon (20).

2. Dispositif émetteur hydraulique (1) selon la revendication 1,
**caractérisé en ce que** l'organe de traction (70) comprend une tige de traction.

3. Dispositif émetteur hydraulique (1) selon l'une des revendications précédentes,
**caractérisé en ce qu'**un canal hydraulique (75) allant du vérin hydraulique (80) à la conduite hydraulique (100), reliée au dispositif récepteur hydraulique associé, est disposé dans l'organe de traction (70).

4. Dispositif émetteur hydraulique (1) selon l'une des revendications précédentes,
**caractérisé en ce que** l'organe de déplacement (60) est relié à l'organe de traction (70).

5. Dispositif émetteur hydraulique (1) selon l'une des revendications précédentes,
**caractérisé en ce que** le levier (10) est articulé sur deux axes de rotation (41A, 41B) sur lesquels viennent en prise deux bras (51A, 51B) articulés en rotation sur le levier (10).

6. Dispositif émetteur hydraulique (1) selon la revendication 5,
**caractérisé en ce que** l'un des bras (51B) fait partie d'une pièce de pression (50B).

7. Dispositif émetteur hydraulique (1) selon l'une des revendications précédentes,
**caractérisé en ce que** le dispositif émetteur hydraulique (1) comprend un dispositif de réglage de la largeur de préhension qui permet de régler la distance entre le logement (40) pour le levier (10) et le cylindre émetteur (80) afin de régler la largeur de préhension.

8. Dispositif émetteur hydraulique (1) selon l'une des revendications précédentes,
**caractérisé en ce que** le logement (40) est disposé sur le tube de guidon (20) de manière à pouvoir être déplacé.

9. Dispositif émetteur hydraulique (1) selon l'une des revendications précédentes,
**caractérisé en ce que** le cylindre émetteur (80) est disposé dans le tube de guidon (20) de manière à pouvoir être déplacé.

10. Dispositif émetteur hydraulique (1) selon l'une des revendications précédentes,
**caractérisé en ce que** la longueur de l'organe de traction (70) est réglable.

11. Dispositif émetteur hydraulique (1) selon l'une des revendications précédentes,
**caractérisé en ce que** l'organe de traction comprend un moyen de blocage anti-rotation qui empêche ou limite une rotation de l'organe de traction dans le tube de guidon.

12. Dispositif émetteur hydraulique (1) selon l'une des revendications précédentes,
**caractérisé en ce que** le dispositif émetteur hydraulique (1) présente un espace de compensation (90) disposé dans le tube du guidon.

13. Dispositif émetteur hydraulique (1) selon la revendication 12, **caractérisé en ce que** le cylindre émetteur (80) est disposé entre le logement (40) pour le levier (10) et l'espace de compensation (99).

14. Dispositif émetteur hydraulique (1) selon l'une des revendications 12 à 13,
**caractérisé en ce que** le cylindre émetteur (80) est disposé entre l'organe de déplacement (60) et l'espace de compensation (90).

15. Dispositif émetteur hydraulique (1) selon l'une des revendications 12 à 14,
**caractérisé en ce que** le cylindre émetteur (80) comprend un prolongement (86) dans lequel est disposé l'espace de compensation (90).
